(19) Europäisches Patentamt / European Patent Office / Office européen des brevets

(11) **EP 2 341 214 A1**

## (12) EUROPEAN PATENT APPLICATION

(43) Date of publication:
**06.07.2011 Bulletin 2011/27**

(21) Application number: **09180921.0**

(22) Date of filing: **29.12.2009**

(51) Int Cl.:
*E21B 47/06* (2006.01)  *E21B 47/10* (2006.01)
*G01V 3/18* (2006.01)  *G01F 1/69* (2006.01)
*G01F 1/698* (2006.01)  *G01F 25/00* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Welltec A/S
3450 Allerød (DK)**

(72) Inventors:
• **Hallundbæk, Jørgen
DK-3230, Græsted (DK)**
• **Kjærsgaard-Rasmussen, Jimmy
3460, Birkerød (DK)**

(74) Representative: **Hoffmann Dragsted A/S
Rådhuspladsen 16
1550 Copenhagen V (DK)**

## (54) Thermography logging tool

(57) The invention relates to a logging tool for determining the properties of a fluid surrounding the tool arranged downhole in a casing comprising a wall and having a longitudinal extension. The logging tool has a substantially longitudinal cylindrical shape with a longitudinal axis, and the logging tool comprises a sensor unit comprising an anemometer having a resistance probe electrically connected with three other resistors, a voltmeter and an amplifier to form a bridge circuit, such as a Wheatstone bridge, having bridge current and bridge voltage. The invention further relates to a method for determining the properties of a fluid by means of the logging tool.

Fig. 2A

**(Cont. next page)**

Fig. 2B

**Description**

Technical field

The present invention relates to a logging tool for determining the properties of a fluid surrounding the tool arranged downhole in a casing comprising a wall and having a longitudinal extension. The logging tool has a substantially longitudinal cylindrical shape with a longitudinal axis, and the logging tool comprises a sensor unit comprising an anemometer having a resistance probe electrically connected with three other resistors, a voltmeter and an amplifier to form a bridge circuit, such as a Wheatstone bridge, having bridge current and bridge voltage. The invention further relates to a method for determining the properties of a fluid by means of the logging tool.

Background

When producing oil, it may be useful to be able to determine the fluid properties of the fluid in order to optimise the production process. Samples may be taken during production, or a tool able to conduct certain measurements may be loaded into the well.

One of such tools is disclosed in US 5,551,287. In this tool, a constant temperature anemometer is used to determine the velocity of a fluid. However, in order to measure the velocity, the instrument must be calibrated to ensure that a change in the resistance and thus in the temperature of the sensor depends only on the velocity.

When measuring the velocity several places in a well, e.g. in the side tracks, the fluid property changes from one position in the well to another, and the tool needs calibration from position to position in the well, or the measurements are inaccurate.

Description of the invention

It is an object of the present invention to wholly or partly overcome the above disadvantages and drawbacks of the prior art and provide an improved logging tool giving more accurate measurements of the fluid properties.

The above objects, together with numerous other objects, advantages, and features, which will become evident from the below description, are accomplished by a solution in accordance with the present invention by a logging tool for determining the properties of a fluid surrounding the tool arranged downhole in a casing comprising a wall and having a longitudinal extension, the logging tool having a substantially longitudinal cylindrical shape with a longitudinal axis, wherein the logging tool comprises:

- a sensor unit comprising an anemometer having:
- a resistance probe electrically connected with three other resistors, a voltmeter and an amplifier to form a bridge circuit, such as a Wheatstone bridge, having bridge current and bridge voltage,

wherein the sensor unit comprises switches for disconnection or connection of the amplifier and connection or disconnection of a voltage supply.

The anemometer may be a hot wire anemometer or a hot film anemometer.

Furthermore, the probe may be arranged on an outer face of the tool.

Moreover, the sensor unit may comprise a plurality of anemometers all having a resistance probe.

Additionally, the probes may be arranged on the outer face of the tool.

In one embodiment, the tool may comprise at least one thermocouple arranged partly on the outer face of the tool.

In another embodiment, the tool may comprise a plurality of electrodes arranged spaced around the longitudinal axis in the periphery of the tool, enabling the fluid to flow between the electrodes and the casing wall.

The logging tool may further comprise a positioning device for determining a position of the logging tool along the longitudinal extension of the casing.

Furthermore, the logging tool may have a space between every two electrodes, which space is substantially filled up with a non-conductive means.

Furthermore, the logging tool may comprise a driving unit for moving the tool in the casing.

In one embodiment, the bridge may be a Wheatstone bridge, and wherein

- a temperature of the probe resistance is maintained constant by varying the current by means of the amplifier so that a first bride voltage is substantially zero when performing a first measurement of a second bridge voltage by the voltmeter, and
- the second bridge voltage is an alternating voltage when performing a second measurement of the first bridge voltage.

In another embodiment, the second bridge voltage may be maintained constant, at a value different from zero, by the voltage supply when performing a third measurement of the first bridge voltage.

In yet another embodiment, a third measurement may performed by using the thermocouples.

The alternating voltage or alternating current may have sine, square, rectangular, triangle, ramp, spiked or sawtooth waveforms.

In an embodiment, the logging tool may further comprise an electrical motor powered by a wireline.

The invention also relates to a method for determining the properties of a fluid by means of the logging tool according to any of the preceding claims, comprising the steps of:

- submerging the logging tool in a casing,

- maintaining a constant temperature in the resistance probe by varying the current,
- increasing the bridge current by means of the amplifier if the temperature in the resistance probe decreases until a first bridge voltage is substantially zero,
- measuring a second bridge voltage by means of the voltmeter,
- disconnecting the amplifier and the voltage supply and connecting a second voltmeter by means of the switches,
- providing the second bridge voltage as an alternating voltage, and
- measuring the first bridge voltage by means of the second voltmeter.

The method may further comprise the steps of:

- disconnecting the amplifier and connecting the voltage supply by means of the switches,
- maintaining the first bridge voltage constant with a value different from zero, and
- measuring the second bridge voltage by means of the voltmeter.

In addition, the method may further comprise the step of measuring the fluid temperature by means of the thermocouples.

Furthermore, the invention relates to the use of a logging tool for determining the fluid properties of a fluid in a well downhole.

Finally, the invention relates to a detection system comprising a logging tool and a calculation unit for processing capacitance measurements measured by the electrodes.

Brief description of the drawings

The invention and its many advantages will be described in more detail below with reference to the accompanying schematic drawings, which for the purpose of illustration show some non-limiting embodiments and in which

Fig. 1 shows a logging tool lowered into a casing of a well,

Fig. 2A shows an anemometer measuring a circuit,

Fig. 2B shows another embodiment of the anemometer measuring a circuit,

Fig. 3 shows another embodiment of the logging tool, and

Fig. 4 shows yet another embodiment of the logging tool.

All the figures are highly schematic and not necessarily to scale, and they show only those parts which are necessary in order to elucidate the invention, other parts being omitted or merely suggested.

Detailed description of the invention

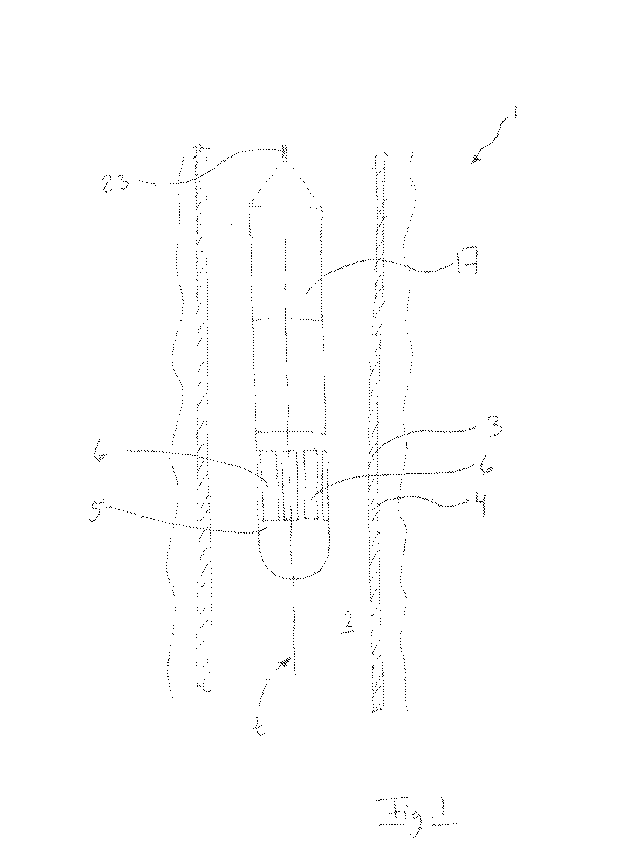

The present invention relates to a logging tool 1 in which temperature and velocity measurements of the fluid 2 surrounding the tool downhole are conducted. The logging tool 1 is shown in a casing 3 in Fig. 1. The tool 1 is lowered into the well and is connected with a wireline 23 holding the tool in a vertical well. The logging tool 1 comprises a sensor unit 5 having at least one anemometer 6 with almost the same design as a constant temperature anemometer. In Fig. 1, the tool 1 has eight anemometers 6 spaced apart along the circumference of the tool.

The tool 1 comprises an electrical motor which is powered through the wireline 23 to supply the sensor unit 5. The logging tool 1 may also be supplied directly through the wireline 23 without having a motor for converting the electricity.

Each anemometer 6 has a resistance probe 7, $R_1$ which is in connection with the fluid 2 in the casing 3, and the heat loss in the resistance probe 7 depends on the temperature of the fluid, the specific heat p of the fluid, and the velocity v of the fluid. In order to determine one of the properties of the fluid 2, at least three measurements must be performed at almost the same time to determine the equations and thus determine one of the fluid properties being the specific heat p, velocity v and/or the temperature T. Measurements of fluid velocity and temperature are often used when having long side tracks since some of these may deliver more water than oil or other undesired elements.

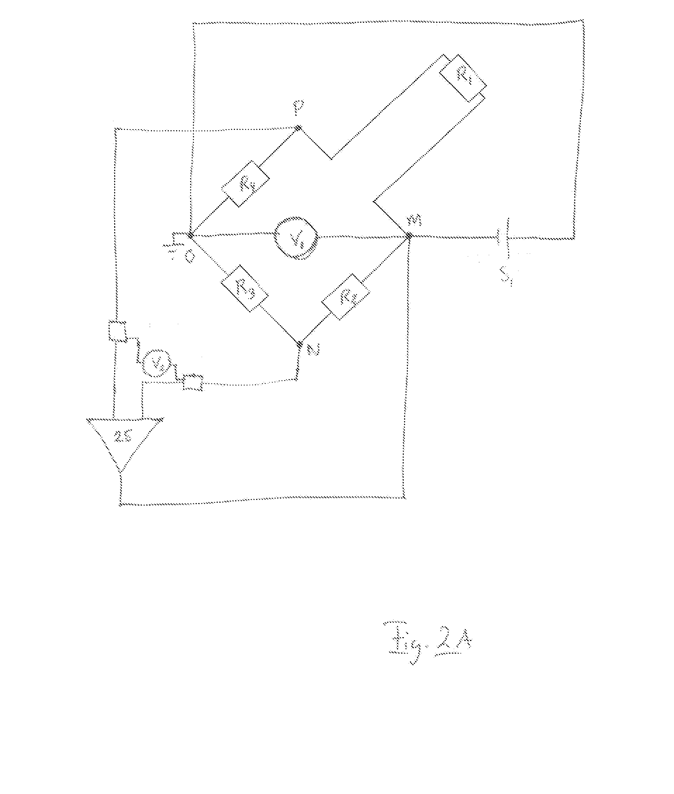

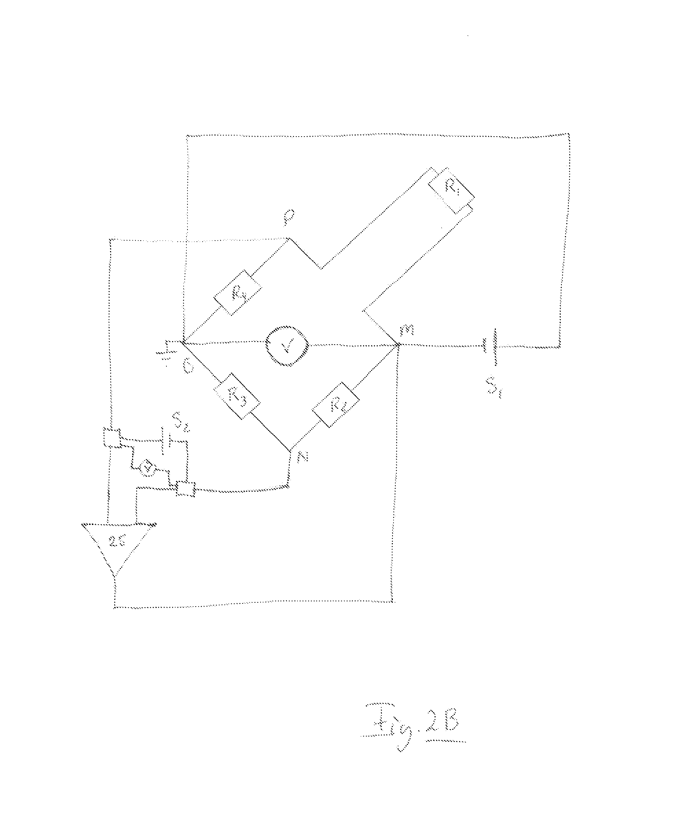

The resistance probe 7, $R_1$ is electrically connected with three other resistors $R_2$, $R_3$, $R_4$, a voltmeter $V_1$ and an amplifier 25 to form a bridge circuit, in this case a Wheatstone bridge, as shown in Figs. 2A and 2B. The sensor unit 5 comprises switches 8 for disconnection or connection of the amplifier 25 when performing some of the measurements. The amplifier 25 is connected to two midpoints P, N on its input side and to a midpoint M on its output side. The voltmeter $V_1$ is connected to the midpoints O, M, and switches are arranged on the input side of the amplifier to enable disconnection or connection of the amplifier A. The switches are furthermore arranged to connect or disconnect a second voltmeter $V_2$. In addition, a first power supply $S_1$, such as a signal generator, is connected to the midpoints O and M in the bridge.

In the following the three measurements are explained and even though the measurements are named first, second and third, they may be performed in a random order. A first measurement is performed as a normal Constant Temperature Anemometry (CTA) in which the resistance probe 7 is heated by electrical current. An amplifier, such as an operation amplifier or a servo amplifier, keeps the bridge in balance so that a first bridge voltage between midpoint P and N is kept at substantially zero by controlling the current to the resistance probe 7 so that the resistance and hence the temperature are kept constant. A second bridge voltage $V_2$ is measured between the midpoints O and M, and the result represents how much effect is needed to keep the bridge in balance and thus a representation of the heat transfer of the fluid as illustrated in the following equations:

The heat transferred from the probe to the fluid must be equal to the energy which is conveyed to the probe by the current running through it:

$$W = \dot{Q}$$

$$\frac{U^2}{R(T_p)} = \frac{v k_f}{A} \Delta T$$

The resistance of the probe $R = R(T_p)$ is a function of the probe-temperature $T_p$, the heat transfer coefficient of the wire with surface area $A$, is $v$ and the thermal conductivity of the fluid is $k_f$. The potential across the probe is $U$ and the temperature difference between the probe and the fluid is $\Delta T = - T_p$.

The heat transfer coefficient is a function of velocity, so the heat loss is velocity dependent. A widely known consequence of this is the 'wind-chill' factor. The velocity dependency is typically found to follow King's law:

$$\frac{U^2}{R(T_p)} = \Delta T(A + B \cdot V^n)$$

Where $A$ and $B$ are calibration factors, $V$ is the velocity and $n < 1$ is another parameter.

A second measurement is performed when the amplifier 25 is disconnected, and the second voltmeter $V_2$ is connected. The second bridge voltage is provided as an alternating voltage by the signal generator $S_1$ and the second measurement is conducted by measuring the second bridge voltage $V_2$ representing the alternating voltage after passing the probe resistance. A sequence of second measurements may subsequently undergo a Fourier transformation to make it possible to determine whether the specific heat p of the fluid 2 by comparing it with known measurements of known fluids.

The alternating voltage may have a waveform, such as a sine, a square, a rectangular, a triangle, a ramp, a spiked or a saw tooth waveform.

A third measurement is performed by disconnecting the amplifier 25 and the second voltmeter $V_2$ and connecting a second power supply $S_2$ and maintaining the first bridge voltage constant at a value different from zero by the second power supply $S_2$. The second measurement is performed by measuring the second bridge voltage by means of the voltmeter $V_1$.

By having switches 8, the sensor unit 6 is able to perform three different measurements at almost the same time, making it possible to determine the fluid properties, i.e. the temperature T, the specific heat p and the velocity v, and it is thus not necessary to set up any presumptions or conduct calibrations before performing a measurement in a new position in the well.

In this way, the logging tool 1 is submerged, and three measurements are performed.

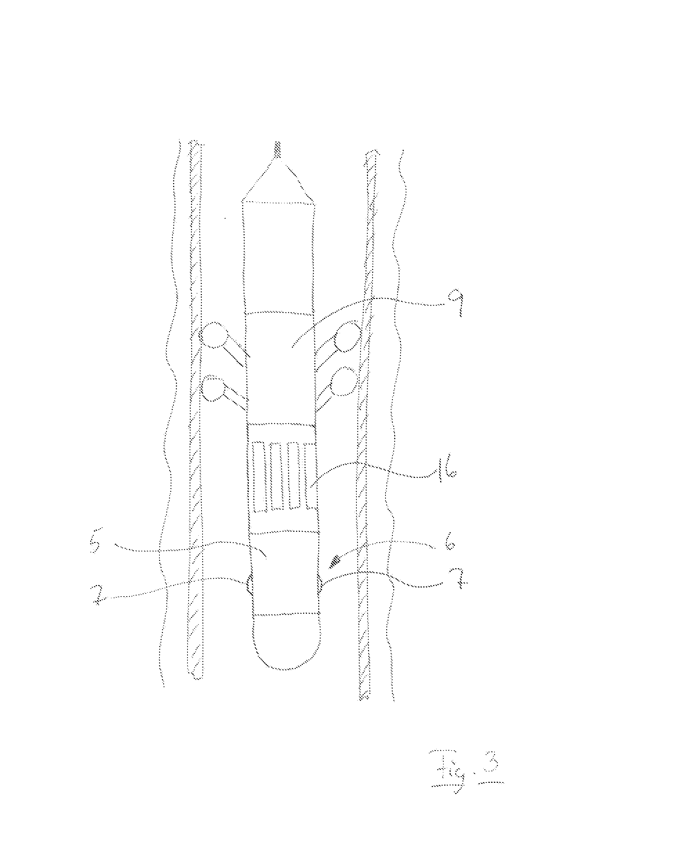

As shown in Fig. 3, the logging tool 1 may comprise a driving unit 9, such as a downhole tractor, for moving the tool forward in the well. This is particularly advantageous when performing measurements in a horizontal part of the well.

The tool 1 has a substantially cylindrical shape with a longitudinal axis t and, when seen in cross-section, probes 7 are arranged in the periphery of the tool, and the fluid 2 thereby flows between the probes and the casing wall 4. The probes 7 are arranged spaced apart and with an even distance between two adjacent probes, creating a space between every two probes.

In Fig. 2, the tool 1 is shown comprising electrodes 16 to measure the capacitance of the fluid 2. By measuring the capacitance, the specific heat p can be determined, and thus, one of the second measurements can be dispensed from. Furthermore, the probes 7 are wires extending radially outwards towards the casing wall 4.

The electrodes 16 for measuring capacitance are positioned in the periphery of the logging tool 1. Opposite the electrodes 16, a dielectric material is arranged, forming a sleeve between the well fluid 2 and the electrodes. The tool 1 comprises a printing circuit (not shown). To improve the conductivity, the electrodes 16 are directly electrically connected to the printing circuit by means of screws instead of a cord.

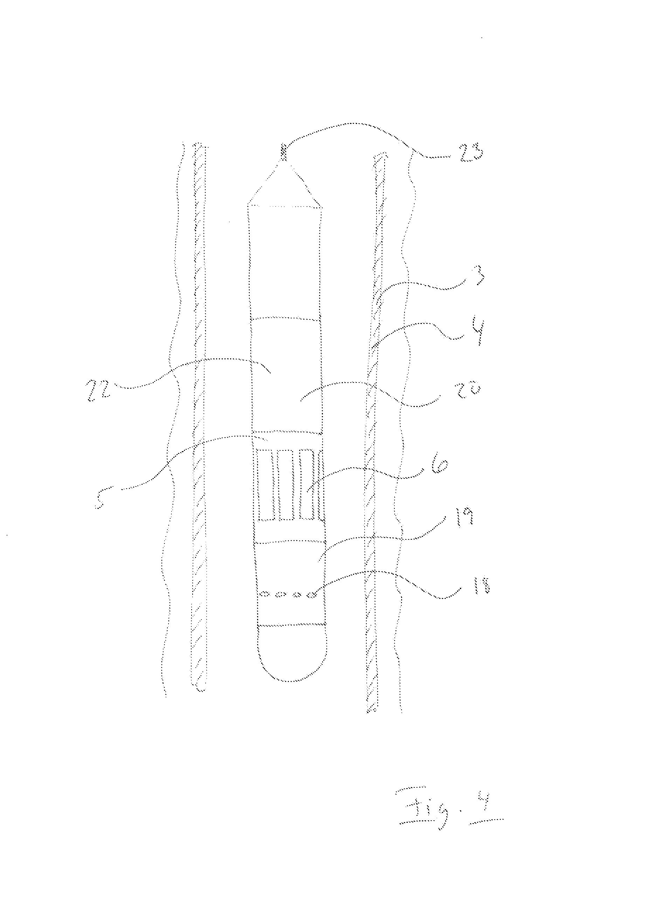

The tool 1 may also have thermocouples 18 arranged around the circumference 19 and the outer face 20 of the tool so that the tips of the electrodes 16 of the thermocouples 18 project radially from the circumference of the tool, as shown in Fig. 4. Instead of the third measurement, the fluid temperature can be measured directly by means of the thermocouples.

As shown in Fig. 1, the probe 7 may also be a kind of film probe with a thin-film sensor. The probe 7 may be a tungsten wire sensor, 1 mm long and 5 μm in diameter, mounted on two needle-shaped prongs. The probes 7 are available with 1, 2 and 3 wires.

The voltmeter may be a analog to digital converter also called an ADC.

By fluid or well fluid 2 is meant any kind of fluid which may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a casing 3 is meant all kinds of pipes, tubings, tubulars, liners, strings, etc. used downhole in relation to oil or natural gas production.

In the event that the tools are not submergible all the way into the casing 3, a downhole tractor can be used to push the tools all the way into position in the well. A downhole tractor is any kind of driving tool capable of pushing or pulling tools in a well downhole, such as a Well Tractor®.

The logging tool may also be lowered into the casing by means of coiled tubing.

Although the invention has been described in the above in connection with preferred embodiments of the invention, it will be evident for a person skilled in the art that several modifications are conceivable without departing from the invention as defined by the following claims.

**Claims**

1. A logging tool (1) for determining the properties of a fluid (2) surrounding the tool arranged downhole in a casing (3) comprising a wall (4) and having a longitudinal extension and a longitudinal axis (t), wherein the logging tool comprises:

   - a sensor unit (5) comprising an anemometer (6) having:
   - a resistance probe (7, $R_1$) electrically connected with three other resistors ($R_2$, $R_3$, $R_4$), a voltmeter (V) and an amplifier (25) to form a bridge circuit, such as a Wheatstone bridge, having a first and a second bridge voltage,

   wherein the sensor unit comprises switches (8) for disconnection or connection of the amplifier and connection or disconnection of a voltage supply.

2. A logging tool according to claim 1, wherein the anemometer is a hot wire anemometer or a hot film anemometer.

3. A logging tool according to claim 1 or 2, wherein the probe is arranged on an outer face (20) of the tool.

4. A logging tool according to any of the preceding claims, wherein the sensor unit comprises a plurality of anemometers all having a resistance probe.

5. A logging tool according to any of the preceding claims, wherein the probes are arranged on the outer face of the tool.

6. A logging tool according to any of the preceding claims, wherein the tool comprises at least one thermocouple (18) arranged partly on the outer face of the tool.

7. A logging tool according to any of the preceding claims, wherein the tool comprises a plurality of electrodes (16) arranged spaced around the longitudinal axis in the periphery of the tool, enabling the fluid to flow between the electrodes and the casing wall.

8. A logging tool according to any of the preceding claims, further comprising a positioning device (22) for determining a position of the logging tool along the longitudinal extension of the casing.

9. A logging tool according to any of the preceding claims,
   the bridge is a Wheatstone bridge, and wherein

   - a temperature of the probe resistance is maintained constant by varying the current by means of the amplifier so that a first bride voltage is substantially zero when performing a first measurement of a second bridge voltage by the voltmeter,

   and

   - the second bridge voltage is an alternating voltage when performing a second measurement of the first bridge voltage.

10. A logging tool according to claim 9, wherein the second bridge voltage is maintained constant at a value different from zero by the voltage supply when performing a third measurement of the first bridge voltage.

11. A logging tool according to claim 9, wherein a third measurement is performed by using the thermocouples.

12. A logging tool according to claim 9, wherein the alternating voltage or alternating current have sine, square, rectangular, triangle, ramp, spiked or sawtooth waveforms.

13. A method for determining the properties of a fluid (2) by means of the logging tool according to any of the preceding claims, comprising the steps of:

   - submerging the logging tool in a casing,
   - maintaining a constant temperature in the resistance probe by varying the current,
- increasing the bridge current by means of the amplifier if the temperature in the resistance probe decreases until a first bridge voltage is substantially zero,
- measuring a second bridge voltage by means of the voltmeter,
- disconnecting the amplifier and the voltage supply and connecting a second voltmeter by means of the switches,
- providing the second bridge voltage as an alternating voltage,
- measuring the first bridge voltage by means of the second voltmeter.

14. Use of a logging tool according to claim 1-10 for determining the fluid properties of a fluid in a well downhole.

15. A detection system comprising a logging tool according to claim 1-10 and a calculation unit for processing capacitance measurements measured by the electrodes and/or a driving unit for moving the tool forward in the casing.

Fig. 1

Fig. 2A

Fig. 2B

Fig. 3

Fig. 4

# EP 2 341 214 A1

Europäisches
Patentamt

European
Patent Office

Office européen
des brevets

## EUROPEAN SEARCH REPORT

Application Number

EP 09 18 0921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 661 236 A (THOMPSON LAIRD B [US]) 26 August 1997 (1997-08-26) | 1-8,14, 15 | INV. E21B47/06 |
| Y | * column 6, lines 26-50; figures 1-4 * <br> * the whole document * | 9-13 | E21B47/10 <br> G01V3/18 <br> G01F1/69 |
| Y | US 2006/155488 A1 (MASLOVICH RANDY J [CA]) 13 July 2006 (2006-07-13) <br> * claims 10,11; figure 1 * <br> * the whole document * | 9-13 | G01F1/698 <br> G01F25/00 |
| X,D | US 5 551 287 A (MAUTE ROBERT E [US] ET AL) 3 September 1996 (1996-09-03) <br> * the whole document * <br> * figure 3 * | 1-8,14, 15 | |
| A | EP 1 657 532 A1 (HITACHI LTD [JP]) 17 May 2006 (2006-05-17) <br> * the whole document * | 9-13 | |
| A | US 2007/144250 A1 (RAMSESH ANILKUMAR [IN]) 28 June 2007 (2007-06-28) <br> * paragraphs [0018] - [0022]; claim 16 * | 9-13 | TECHNICAL FIELDS SEARCHED (IPC) |
| A | US 5 076 099 A (HISANAGA TETSUO [JP] ET AL) 31 December 1991 (1991-12-31) <br> * figures 2-5 * | 9-13 | E21B <br> G01V <br> G01F |
| A | EP 1 329 711 A1 (HONEYWELL INC [US]) 23 July 2003 (2003-07-23) <br> * the whole document * | 9-13 | |
| A | US 5 654 507 A (HICKS THERON J [US] ET AL) 5 August 1997 (1997-08-05) <br> * the whole document * | 9-13 | |

The present search report has been drawn up for all claims

| Place of search | Date of completion of the search | Examiner |
|---|---|---|
| The Hague | 7 June 2010 | van Berlo, André |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 18 0921

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2010

| Patent document cited in search report | | Publication date | Patent family member(s) | | Publication date |
|---|---|---|---|---|---|
| US 5661236 | A | 26-08-1997 | AU | 711067 B2 | 07-10-1999 |
| | | | AU | 3131597 A | 05-01-1998 |
| | | | BR | 9709356 A | 10-08-1999 |
| | | | CA | 2256604 A1 | 11-12-1997 |
| | | | EP | 0900321 A1 | 10-03-1999 |
| | | | NO | 985461 A | 25-01-1999 |
| | | | WO | 9746792 A1 | 11-12-1997 |
| US 2006155488 | A1 | 13-07-2006 | NONE | | |
| US 5551287 | A | 03-09-1996 | CA | 2209918 A1 | 08-08-1996 |
| | | | EP | 0807202 A1 | 19-11-1997 |
| | | | WO | 9623957 A1 | 08-08-1996 |
| EP 1657532 | A1 | 17-05-2006 | JP | 2006138688 A | 01-06-2006 |
| | | | US | 2006096305 A1 | 11-05-2006 |
| US 2007144250 | A1 | 28-06-2007 | EP | 1963791 A2 | 03-09-2008 |
| | | | WO | 2007075510 A2 | 05-07-2007 |
| US 5076099 | A | 31-12-1991 | AT | 136643 T | 15-04-1996 |
| | | | DE | 4024827 A1 | 14-02-1991 |
| | | | DE | 69026454 D1 | 15-05-1996 |
| | | | DE | 69026454 T2 | 28-11-1996 |
| | | | EP | 0421585 A2 | 10-04-1991 |
| | | | GB | 2235298 A | 27-02-1991 |
| | | | JP | 1934210 C | 26-05-1995 |
| | | | JP | 3067129 A | 22-03-1991 |
| | | | JP | 6063803 B | 22-08-1994 |
| EP 1329711 | A1 | 23-07-2003 | EP | 1329712 A1 | 23-07-2003 |
| | | | EP | 1329713 A1 | 23-07-2003 |
| US 5654507 | A | 05-08-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5551287 A